# EUROPEAN PATENT SPECIFICATION

(11) **EP 2 475 219 B1**
(45) Date of publication and mention of the grant of the patent: **05.07.2017**
(21) Application number: 11290004.8
(22) Date of filing: 05.01.2011
(51) Int. Cl.: H04W 88/10

(54) **Method for operating a base station of a wireless network, method for operating a terminal of a wireless network, base station, and terminal**
Verfahren zum Betrieb einer Basisstation eines drahtlosen Netzwerks, Verfahren zum Betrieb eines Endgeräts eines drahtlosen Netzwerks, Basisstation und Endgerät
Procédé de fonctionnement d'une station de base d'un réseau de communication sans fil, procédé de fonctionnement d'un terminal d'un réseau sans fil, station de base et terminal

(43) Date of publication of application: 11.07.2012
(73) Proprietor: ALCATEL LUCENT, 92100 Boulogne-Billancourt (FR)
(72) Inventor: Fahldieck, Torsten, 71254 Ditzingen (DE)
(74) Representative: Wetzel, Emmanuelle

(56) References cited:
- EP-A2- 1 659 740
- WO-A2-2008/066928
- US-A1- 2010 135 272
- HAYOUNG YOON ET AL: "Dynamic admission control in IEEE 802.11e EDCA-based wireless home network", CONSUMER COMMUNICATIONS AND NETWORKING CONFERENCE, 2006. CCNC 2006. 20 06 3RD IEEE LAS VEGAS, NV, USA 8-10 JAN. 2006, PISCATAWAY, NJ, USA,IEEE, vol. 1, 8 January 2006 (2006-01-08), pages 55-59, XP010893130, DOI: 10.1109/CCNC.2006.1592987 ISBN: 978-1-4244-0085-0

## Description

### Field of the invention

The present invention refers to a method for operating a base station of a wireless network and a method for operating a terminal of the wireless network. Furthermore the present invention refers to a base station and a terminal.

### Background

Cellular communication networks are well known in the art. Most existing cellular networks use a centralized approach for controlling access by terminals of these networks to transmission resources of the network. Control means of the network assign different portions of the transmission resources to the individual terminals, with the access to the transmission resources being fully controlled by these control means. Said control means typically reside within an access network element such as a base station of the cellular network.

Furthermore, radio systems for local area communication such as Wireless Local Area Networks (WLAN) are known in the art. In such a radio system, access control to its transmission resources (media access control) is distributed among stations of the radio system. Typically, contention-based procedures for controlling the access to the transmission resources are used.

On one hand, contention-based media access control is often less efficient than centralized access control because collisions that occur if two stations are accidentally accessing the transmission resources simultaneously must be resolved by a collision resolution algorithm. On the other hand, radio systems such as a WLAN often provide high bitrates and are inexpensive, in particular when using unlicensed radio frequency bands.

WO 2008/066928 A2 describes a wireless access point which manages wireless service to a multi-mode wireless communication device based on a wireless wide area network signal. The access point determines whether to provide WLAN service to the multi-mode wireless communication device at least partially on a characteristic of the WWAN signal such as, for example, a power level signal quality.

XP 010893130 relates to dynamic admission control in IEEE 802.11e EDCA-based wireless home network. The proposed dynamic admission control dynamically adjusts to achieve high bandwidth utilization while maintaining the desired quality of service in a deteriorative channel condition.

### Summary

The object of the present invention is to provide a method for controlling a base station or a terminal of a wireless network as well as providing a base station and a terminal that augment the capacity of the network and that allows for using the transmission resources efficiently.

According to an embodiment, a method for operating a base station of a wireless network is provided, the method comprising communicating with at least one terminal of the network via a first radio system using centralized media access control for controlling an access to transmission resources of the first radio system, communicating with the at least one terminal via a second radio system different from the first radio system, and transmitting at least one resource grant message to the terminal via the first radio system, the resource grant message indicating at least one portion of transmission resources of the second radio system assigned to the terminal for transmitting via the second radio system.

When operating a base station according to this method, the two radio systems are used simultaneously for communication with the terminal. Communication using both radio systems allows for transmitting with high data rates between the base station and the terminal. The transmission resources of both radio systems are assigned to the terminal according to central media access control, e.g. by transmitting the resource grant message. Using centralized media access control for both radio systems allows for using the transmission resources efficiently. Collisions, which occur when using contention-based media access control, can be avoided. Furthermore, operation of the two radio systems may be coordinated so that they appear to a network protocol entity, such as an Internet Protocol (IP) entity as a single link layer protocol entity.

In an embodiment, the first radio system may be a cellular system specified by the 3^{rd} Generation Partnership Project (3GPP) such as the Universal Mobile Telecommunications System (UMTS), the Long Term Evolution (LTE) System, or the LTE-Advanced System. However the wireless network may also be the Worldwide Interoperability for Microwave Access (WiMAX) system specified by the IEEE. The second radio system may be a radio system for local area communication such as a wireless Local Area Network (WLAN). WLANs are often referred to as "WiFi networks".

In particular in embodiments where the first radio system is a cellular network and the second radio system is a WLAN, the second radio system may enhance the first radio system by providing additional transmission capacity. Preferably, data flows that have rather low real-time constraints but require a relative high bitrate (e.g. web access, non-real-time video transfer, file transfer, etc.) may be transmitted over the second radio system. Flows having rather strict real-time constraints such as telephony (e.g. voice over IP) may be transmitted over the first radio system.

Preferably, the method comprises transferring at least one acknowledgement over the first radio system, the acknowledgement being related to payload data transmitted over the second radio system. Using the first radio system for acknowledging payload data transmitted over the second radio system further improves the efficiency because collisions of the acknowledgment with other acknowledgments and/or payload data packets can be avoided.

In a preferred embodiment, the method comprises receiving a transmit request message from the terminal over the first radio system and transmitting the resources grant message in response to the transmit request message. This allows for the terminal to request transmission resources for a communication initiated by the terminal.

In an embodiment, the method comprises establishing a data connection between the base station and the terminal over the first radio system for transferring the transmit request message, the resource grant message and/or the acknowledgement message. The data connection preferably being a data connection of a type of data connections that could also be used for normal payload transmissions over the first radio system, the first radio system, in particular protocols thereof, need not to be adapted or extended in order to allow for transferring messages related to media access control of the second radio system, e.g. the resource grant message, the transmit request message, or the acknowledgment. In particular, existing technical specifications or standards of the first radio system need not to be extended. Thus, the method can easily implemented using existing radio systems that have centralized media access control like UMTS, LTE, LTE-Advanced, or WiMAX.

In order to transmit the messages related to media access control of the second radio system reliably even in case of a high load of the first radio system, an embodiment is suggested, according to which transmissions over the data connection are scheduled with a high priority.

The methods described herein require that the terminal be able to use two radio systems. Thus, in an embodiment, the method comprises verifying whether the terminal supports transmissions over the second radio system.

In some embodiments, the second radio system provides contention-based media access control. Preferably, at least a part of the transmission resources of the second radio system may be reserved to be controlled by the methods described herein and excluded from contention-based media access control. To this end, in an embodiment, the method comprises broadcasting at least one network allocation message over the second radio system in order to prevent at least one further terminal from accessing the at least one portion of the transmission resources of the second radio system. Only the terminal that has received the resource grant message will access the portion of the transmission resources, whereas the at least one further terminal will not transmit on this portion of the transmission resources.

Preferably, the at least one portion is a time interval of a channel, e.g. a frequency band, of the transmission resources of the second radio system and the network allocation message is broadcasted in order to prevent the at least one further terminal from accessing said channel.

In an embodiment, the radio transmission resources of the second radio system are partitioned. A first part of the transmission resources may be controlled by one of the methods described herein. A second part of the transmission resources may by controlled by other means like contention-based media access control. For instance, contention-based media access control may be used for controlling access to at least some transmission resources of the second radio system.

In an embodiment, where the second radio system is a WLAN, at least one channel of the WLAN may be reserved for being controlled by a method described herein. Although all channels of the WLAN may be controlled by a method described herein, it is possible to reserve a least one further channel for contention-based media access control.

According to another embodiment, a method for operating a terminal of a wireless network is provided, the method comprising communicating with a base station via a first radio system using centralized media access control for controlling an access to transmission resources of the wireless network, communicating with the base station via a second radio system different from the first radio system, and receiving at least one resource grant message transmitted by the base station via the first radio system, the resource grant message indicating at least one portion of transmission resources of the second radio system assigned to the terminal.

Preferably, the method comprises transferring at least one acknowledgement over the first radio system, the acknowledgment being related to payload data transmitted over the second radio system.

In a preferred embodiment, the method comprises transmitting a transmit request message by the terminal over the first radio system and receiving the resources grant message in response to the transmit request message over the first radio system.

Furthermore, in an embodiment, the method comprises establishing a data connection between the base station and the terminal over the first radio system for transferring the transmit request message, the resource grant message and/or the acknowledgement message.

According to yet another embodiment, a base station for a wireless communication network is provided, said base station being configured for communicating with at least one terminal via a first radio system of the network using centralized media access control for controlling an access to transmission resources of the first radio system, communicating with the at least one terminal via a second radio system different from the first radio system, and transmitting at least one resource grant message to the terminal via the first radio system, the resource grant message indicating at least one portion of transmission resources of the second radio system assigned to the terminal.

Preferably, the base station is configured for executing one of the above-described methods for operating a base station. To this end, the base station may comprise control circuitry such as a processor configured, e.g. programmed, for executing one of the above-described methods for operating a base station.

According to still another embodiment, a terminal for a wireless communication network is provided, said terminal being configured for communicating with a base station of the network via a first radio system using centralized media access control for controlling an access to transmission resources of the first radio system, communicating with the base station via a second radio system different from the first radio system, and receiving at least one resource grant message transmitted by the base station via the first radio system, the resource grant message indicating at least one portion of transmission resources of the second radio system assigned to the terminal.

The above-described terminal and the base station are related to each other. According to an embodiment, a wireless network is provided, said network comprising at least one base station according to the invention and at least one terminal according the invention. In this embodiment, the base station and the terminal communicate with each other by simultaneously using the two radio systems.

In an embodiment, the terminal is further configured for executing one of the above-described methods for operating a terminal. To this end, the terminal may comprise control circuitry such as a processor configured, e.g. programmed, for executing one of the above-described methods for operating a terminal.

### Brief description of the Figures

Preferred embodiments and further advantages of the present invention are shown in the Figures and described in detail hereinafter.
- Figure 1: shows a wireless network having a base station and a terminal;
- Figure 2: shows a message sequence chart of messages exchanged within the network;
- Figure 3: shows a diagram of network allocation messages transmitted by the base station;
- Figure 4: shows downlink and uplink data transmissions between the base station and the terminal; and

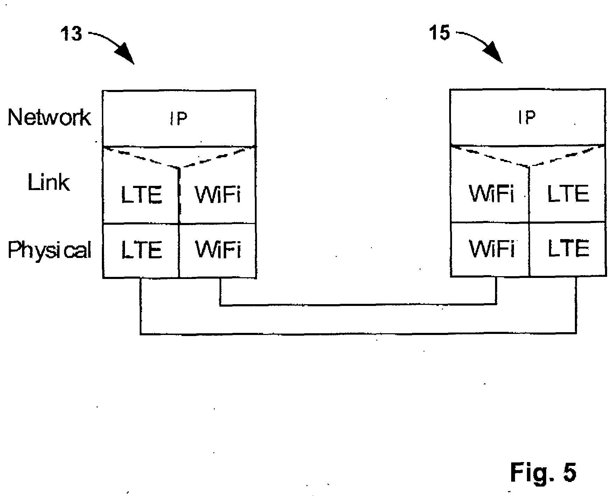

- Figure 5: shows a protocol stack of protocols used by the base station and the terminal.

### Description of the embodiments

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

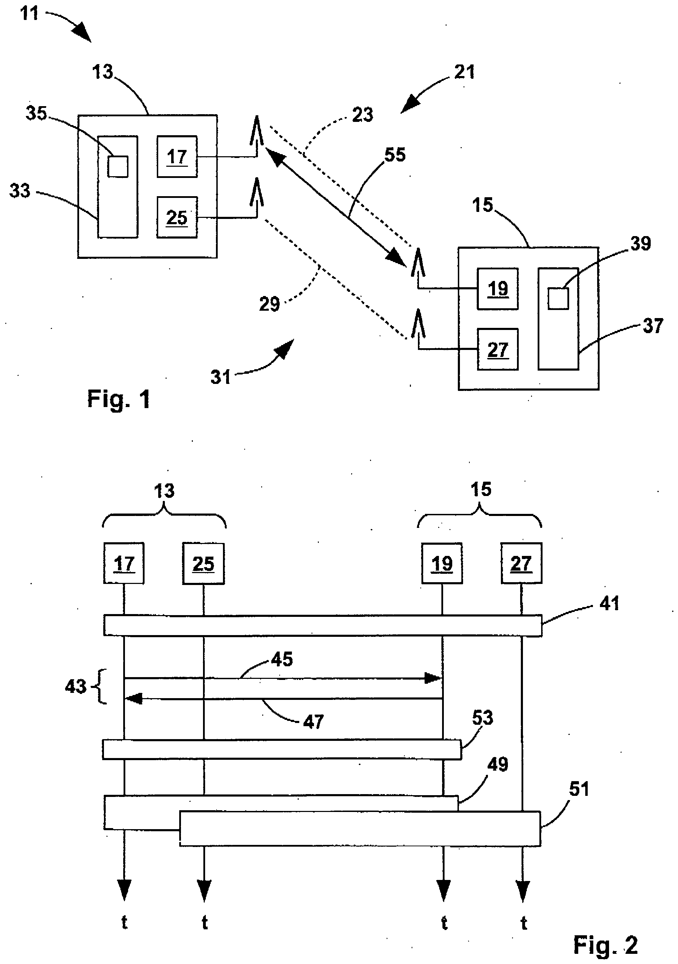

Figure 1 shows a wireless network 11 having a base station 13 and a terminal 15. For the sake of simplicity only one terminal 15 is shown although the network 11 may comprise multiple terminals 15 registered with the base station 13.

The base station 13 has a first transceiver 17 arranged for communicating with a second transceiver 19 of the terminal 15 using a first radio system 21. The first radio system 21 uses centralized medium access control in order to coordinate the access by the base station 13 and one or more terminals 15 to first transmission resources 23 of the first radio system 21. In the shown embodiment, the first radio system 21 is a LTE system or a LTE-Advanced system. However, the first radio system 21 may be a cellular or non-cellular radio communication system of a different type. For example, the first radio system 21 may be GSM, UMTS, or WiMAX.

Furthermore, the base station 13 has a third transceiver 25 for communicating with a fourth transceiver 27 of the terminal 15 using second transmission resources 29 of a second radio system 31. The second radio system 31 may be of any type. Preferably, the second radio system 31 is a rather simple system, e.g. a radio system for local area communication. In the shown embodiment, the second radio system is a wireless local area network (WLAN) providing contention-based media access control procedures in order to coordinate the access by the base station 13 and the at least one terminal 15 to the second transmission resources 29. For example, the second radio system may be a WLAN according to the technical specification IEEE 802.11 and related technical standards.

The base station 13 has control circuitry such as a first processor 33 for controlling the base station 13, in particular its transceivers 17, 25. The first processor 33 may comprise first storage means 35 that store a computer program for executing a method for operating the base station 13 when executed by the first processor 33.

Furthermore, the terminal 15 has a second processor 37 for controlling the terminal 15, in particular its transceivers 19, 27. The second processor 37 may comprise second storage means 39 that store a computer program for performing a method for operating the terminal 15 when executed by the second processor 37.

The base station 13 may be a so-called pico base station or femto base station that may be deployed to improve a coverage of the network 11 in indoor environments. A femto base station typically has a coverage area (foot print) similar to a WLAN access point. The base station 13 supports two wireless technologies corresponding to the two radio systems 21, 31. Preferably, the first transmission resources 23 and the second transmission resources 29 are completely different from each other. In the shown embodiment, the first transmission resources 23 correspond to radio spectrum dedicated for the LTE system, whereas the second transmission resources 29 correspond to unlicensed frequency bands used for local wireless communication. Accordingly, the terminal 15 supports the two wireless technologies corresponding to the two radio systems 21, 31. Thus, the base station 13 and the terminal 15 can communicate with each other, e.g. perform data transmissions, using both radio systems 21, 31 simultaneously. Using two radio systems 21, 31 simultaneously allows for communicating with comparatively high bit rates, which may be useful if the terminal 15 is a smartphone or a laptop.

In the following, methods for operating the base station 13 and the terminal 15 are described that allow for coordinating the access by a base station 13 and/or the terminal 15 to the second transmission resources 29 without relying on contention-based media access procedures of the link layer protocols used in the second radio system 31.

Figure 2 shows an exemplary message exchange between the transceivers 17, 19, 25, and 27. After a start of the methods executed on the base station 13 and the terminal 15, respectively, the terminal 15 registers with the base station 13 (block 41). Then the base station 13 performs a capability check 43 in order to verify whether the terminal 15 is capable of communicating via both radio systems 21, 31 simultaneously according to the methods described herein. To this end, the base station 13 sends a capability request message 45 to the terminal 15 using the first radio system 21, i.e. the capability request message 45 is transmitted from the first transceiver 17 to the second transceiver 19. Then the first transceiver 19 of the terminal 15 may transmit capability response message 47 to the first transceiver 17 using the first radio system 21 in order to respond to the capability request message 45 and to indicate whether the terminal 15 supports simultaneous transmissions according to the methods described herein. The capability response message 47 may indicate whether the terminal 15 is capable of communication using the two radio systems 21, 31 and/or whether the terminal 15 supports controlling access to the second transmission resources 29 according to the methods described herein.

In another embodiment a capability check 43 is performed by exchanging the messages 45, 47 over the second radio system 31, i.e. between the third transceiver 25 and the fourth transceiver 27.

After the capability check 43, a regular bi-directional data connection 55 (cf. Figure 1) over the first radio system 21 between the base station 13 and the terminal 15 is established (block 53). This data connection is used as a control channel for the second radio system 31. The data connection may correspond to a type of data connection that is also used for transmission of payload data between the base station 13 and the terminal 15. By using such a type of data connections a modification of technical standards related to the first radio system 21 can be avoided.

The base station 13 and the terminal 15 communicate with each other - e.g. exchange payload data packets - using the first radio system 21 (block 49) and the second radio system 31 (block 51) simultaneously.

Control of media access, i.e. access to the second transmission resources 29, is performed in a centralized way by the base station 13 using the first radio system 21.

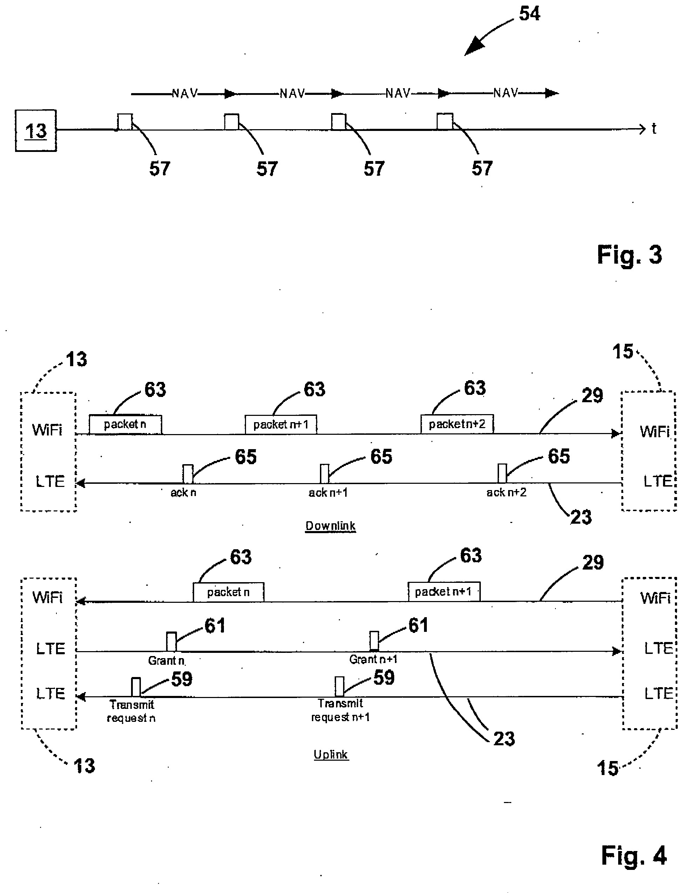

As shown in Figure 3, the base station 13 transmits periodically a network allocation message 53 using the third transceiver 25 over a channel 54 of the second radio system 31 that is reserved for communicating according to the methods described herein. In the shown embodiment, the channel 54 corresponds to a frequency band of the second transmission resources 29. The network allocation message 53 comprises a network allocation vector NAV that indicates that the channel 54 is reserved and may not be accessed according to a contention-based medium access protocol of the second radio system 31. In a preferred embodiment, the network allocation message 53 corresponds to a network allocation message specified by technical standard related to the second radio system 31. Consequently, conventional terminals adapted for communicating over the second radio system 31, e.g. wireless stations complying with IEEE 802.11, will not access this configured channel of the second radio system 31.

The network allocation vector NAV indicates a time interval during which the channel 54 shall not be accessed. Preferably, the third transceiver 25 of the base station 13 sends a new network allocation message 53 containing a new NAV before the current NAV expires. Repeatedly or periodically sending the network allocation message 53 prevents the further terminals 15 from transmitting on the reserved channel 54.

In the shown embodiment, only one channel 54 of the second radio transmission resource 29 of the second radio system 31 is reserved for communicating according to the methods described herein. However, in the different embodiment, more than one channel of the second radio system 31 may be reserved. Preferably, an identifier, e.g. a number, of the reserved channel is statically configured within the base station 13 and communicated to the terminal 15, e.g. during registration 41 and/or during the capability check 43.

A downlink data transfer from the base station 13 to the terminal 15 using the second radio system 31 being controlled via the first radio system 21 is shown on the top of Figure 4. The third transceiver 25 transmits data packets 63 over the second radio transmission resources 29 to the fourth transceiver 27. Then the second transceiver 19 of terminal 15 sends acknowledgements 65 in response to the corresponding data packets 63 over the data connection 55, i.e. the first radio transmission resources 23.

An uplink data communication over the second radio system 31 is shown on the bottom of Figure 4. The second transceiver 19 of the terminal 15 transmits a transmit request message 59 over the data connection 55 to the first transceiver 17 of the base station 13. The base station 13 responds to the transmit request message 59 by transmitting a resource grant message 61 over the data connection 55 back to the terminal 15. The resource grant message 61 contains information elements, which give to the terminal 15 sufficient information on how to send an up link data packet 63 using the second radio system 31. This information elements may comprise information about transmit time, packet size and/or packet count. The terminal 15 transmits the data packets 63 on those portions, e.g. time intervals, of the second transmission resources 29 indicated in the resources grant messages 61. Terminals 15 transmitting only when instructed by the resources grant messages 61 sent by the base station 13, avoids collisions on the second radio resources 29, in particular on the channel 54, and therefore improves the efficiency of the network 11.

The acknowledgement messages 65 related to the data packet transmitted over the second radio system 31 are transmitted over the first radio system 21. An acknowledgement message 65 may comprise a reference to the related data packet. In an embodiment, a high priority is assigned to transmission over the data connection 55 in order to make sure that the above-described control procedures are executed on time even if there is a high load on the first radio system 22. When using LTE, the data connection 55 may be set up with a QoS Class Identifier (QCI) indicating a Quality of Service (QoS) class corresponding to a high priority for packet scheduling. For instance, the CQI may be set to a value of 5, which gives the data connection 55 the highest possible packet scheduling priority of one.

In some embodiments, the second radio system 31, e.g. a WLAN according to IEEE 802.11, uses its own acknowledgment messages which are transmitted on the second transmission resources 29. In an embodiment, the acknowledgement messages 65 are transmitted in addition to these acknowledgement messages transmitted on the second transmission resources. In another embodiment, the acknowledgment messages 65 replace the acknowledgement messages transmitted on the second transmission resources, i.e. no acknowledgement messages are transmitted over the second transmission resources 29.

In an embodiment, the second radio system 31 is used for non real-time services like web-browsing, e-mail, file down load, peer-to-peer traffic. Real time sensitive services such as voice over IP (VoIP) or real time video should use the first radio system 21.

Figure 4 shows protocol stacks of the base station 13 and the terminal 15. In a preferred embodiment, the protocol implementation of the base station 13 and/or the terminal 15 comprises mechanism for assigning different data flows to be transmitted between the base station 13 and the terminal 15 either to a connection of the first radio system 21 or to the second radio system 31 according to their quality of service constrains. Both link layer protocol entities of the first radio system (e.g. LTE) and the second radio system (WiFi) may be combined so as the link layer appears as one entity from the network layer (IP) perspective.

To sum up, the method described herein allow for improving the data communication between the base station 13 and the terminal 15 by modifying the media access control protocol of the second radio system 31, e.g. WLAN, such that the media access to at least a part of the second transmission resources 29 is controlled centrally by the base station. Control information for controlling the access to the second radio transmission resources 29 is transmitted via the data connection 55 of the first radio system 21. Using a conventional data connection 55 for transmitting the control messages 59, 61, 65 allows for implementing the methods without modifying the first radio system 21. However, in an embodiment, the second radio system 31 may be modified by transmitting the acknowledgments 65 over the data connection 55 instead of the second radio transmission resources 29 of the second radio system 31.

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. Method for operating a base station (13) of a wireless network (11), the method comprising
- communicating (49) with at least one terminal (15) of the network (11) via a first radio system (21) using centralized media access control for controlling an access to transmission resources (23) of the first radio system (21) and
- communicating (51) with the at least one terminal (15) via a second radio system (31) different from the first radio system (21),
wherein the method is **characterized by** further comprising:
- transmitting at least one resource grant message (61) to the terminal (15) via the first radio system (21), the resource grant message (61) indicating at least one portion of transmission resources (29) of the second radio system (31) assigned to the terminal (15).

2. Method according to claim 1, wherein the method comprises transferring at least one acknowledgement (65) over the first radio system (21), the acknowledgement (65) being related to payload data (63) transmitted over the second radio system (31).

3. Method according to claim 1 or 2, wherein the method comprises receiving a transmit request message (59) from the terminal (15) over the first radio system (21) and transmitting the resources grant message (61) in response to the transmit request message (59).

4. Method according to one of the precedent claims, wherein the method comprises establishing a data connection (55) between the base station (13) and the terminal (15) over the first radio system (21) for transferring the transmit request message (59), the resource grant message (61) and/or the acknowledgement message (65).

5. Method according to claim 4, wherein transmissions over the data connection (55) are scheduled with a high priority.

6. Method according to one of the precedent claims, wherein the method comprises verifying (43) whether the terminal (15) supports transmissions over the second radio system (31).

7. Method according to one of the precedent claims, wherein the method comprises broadcasting at least one network allocation message (57) over the second radio system (31) in order to prevent at least one further terminal (15) from accessing the at least one portion of the transmission resources (29) of the second radio system (31).

8. Method according to claim 7, wherein the at least one portion is a time interval of a channel of the second radio system (31) and the network allocation message (57) is broadcasted in order to prevent the at least one further terminal (15) from accessing said channel.

9. Method according to one of the precedent claims, wherein contention-based media access control is used for controlling access to at least some transmission resources (29) of the second radio system (31).

10. Method for operating a terminal (15) of a wireless network, the method comprising
- communicating (49) with a base station (13) of the network (11) via a first radio system (21) using centralized media access control for controlling an access to transmission resources (23) of the first radio system (21) and
- communicating (51) with the base station (13) via a second radio system (31) different from the first radio system (21),
wherein the method is **characterized by** further comprising:
- receiving at least one resource grant message (61) transmitted by the base station (15) via the first radio system (21), the resource grant message (61) indicating at least one portion of transmission resources (29) of the second radio system (31) assigned to the terminal (15).

11. Method according to claim 10, wherein the method comprises transferring at least one acknowledgement (65) over the first radio system (21), the acknowledgement (65) being related to payload data (63) transmitted over the second radio system (31).

12. Method according to claim 10 or 11, wherein the method comprises transmitting a transmit request message (59) over the first radio system (21) and receiving the resources grant message (61) in response to the transmit request message (61) over the first radio system (21).

13. Method according to one of claims 10 to 12, wherein the method comprises establishing a data connection (55) between the base station (13) and the terminal (15) over the first radio system (21) for transferring the transmit request message (59), the resource grant message (61) and/or the acknowledgement message (65).

14. Base station (13) for a wireless communication network (11), said base station (13)
configured for executing a method according to one of claims 1 to 9.

15. Terminal (15) for a wireless communication network (11), said terminal (15)
configured for executing a method according to one of claims 10 to 13.

## Patentansprüche

1. Verfahren für den Betrieb einer Basisstation (13) eines drahtlosen Netzwerks (11), wobei das Verfahren umfasst:
- das Kommunizieren (49) mit mindestens einem Endgerät (15) des Netzwerks (11) über ein erstes Funksystem (21) unter Verwendung zentralisierter Medienzugangssteuerung zur Steuerung eines Zugangs zu Übertragungsbetriebsmitteln (23) eines ersten Funksystems (21) und
- das Kommunizieren (51) mit dem mindestens einen Endgerät (15) über das zweite Funksystem (31), welches ein anderes als das erste Funksystem (21) ist,
wobei das Verfahren **dadurch gekennzeichnet ist, dass** es weiterhin umfasst:
- das Übermitteln mindestens einer Betriebsmittelgewährungsnachricht (61) an das Endgerät (15) über das erste Funksystem (21), wobei die Betriebsmittelgewährungsnachricht (61) mindestens einen Anteil der Übermittlungsressourcen (29) des zweiten Funksystems (31) indiziert, welcher dem Endgerät (15) zugewiesen ist.

2. Verfahren nach Anspruch 1, wobei das Verfahren die Übertragung mindestens einer Bestätigung (65) über das erste Funksystem (21) umfasst, wobei die Bestätigung (65) in Verbindung mit Nutzlastdaten (63) steht, die über das zweite Funksystem (31) übermittelt werden.

3. Verfahren nach Anspruch 1 oder 2, wobei das Verfahren den Empfang einer Übertragungsanforderungsnachricht (59) von dem Endgerät (15) über das erste Funksystem (21) und das Übermitteln der Betriebsmittelgewährungsnachricht (61) in Reaktion auf die Übertragungsanforderungsnachricht (59) umfasst.

4. Verfahren nach einem der vorgenannten Ansprüche, wobei das Verfahren die Einrichtung einer Datenverbindung (55) zwischen der Basisstation (13) und dem Endgerät (15) über das erste Funksystem (21) zum Übermitteln der Übertragungsanforderungsnachricht (59), der Betriebsmittelgewährungsnachricht (61) und/oder der Bestätigungsnachricht (65) umfasst.

5. Verfahren nach Anspruch 4, wobei Übertragungen über die Datenverbindung (55) mit einer hohen Priorität eingeplant werden.

6. Verfahren nach einem der vorgenannten Ansprüche, wobei das Verfahren das Verifizieren (43) umfasst, ob das Endgerät (15) Übertragungen über das zweite Funksystem (31) unterstützt.

7. Verfahren nach einem der vorgenannten Ansprüche, wobei das Verfahren das Senden mindestens einer Zuweisungsnachricht (57) über das zweite Funksystem (31) umfasst, um mindestens ein weiteres Endgerät (15) daran zu hindern, auf den mindestens einen Anteil der Übertragungsbetriebsmittel (29) des zweiten Funksystems (31) zuzugreifen.

8. Verfahren nach Anspruch 7, wobei der mindestens eine Anteil ein Zeitintervall eins Kanals des zweiten Funksystems (31) ist und wobei die Netzwerkzuweisungsnachricht (57) gesendet wird, um das mindestens eine weitere Endgerät (15) daran zu hindern, auf besagten Kanal zuzugreifen.

9. Verfahren nach einem der vorgenannten Ansprüche, wobei für die Steuerung des Zugriffs auf mindestens einige Übertragungsressourcen (29) des zweiten Funksystems (31) konkurrenzbasierte Medienzugangssteuerung eingesetzt wird.

10. Verfahren für den Betrieb eines Endgeräts (15) eines drahtlosen Netzwerks wobei das Verfahren umfasst:
- das Kommunizieren (49) mit einer Basisstation (13) des Netzwerks (11) über ein erstes Funksystem (21) unter Verwendung zentralisierter Medienzugangssteuerung zur Steuerung eines Zugangs zu Übertragungsbetriebsmitteln (23) eines ersten Funksystems (21) und
- das Kommunizieren (51) mit der Basisstation (13) über das zweite Funksystem (31), welches ein anderes als das erste Funksystem (21) ist,
wobei das Verfahren **dadurch gekennzeichnet ist, dass** es weiterhin umfasst:
- den Empfang mindestens einer von der Basisstation (15) über das erste Funksystem (21) übermittelten Betriebsmittelgewährungsnachricht (61), wobei die Betriebsmittelgewährungsnachricht (61) mindestens einen Anteil der Übermittlungsressourcen (29) des zweiten Funksystems (31) indiziert, welcher dem Endgerät (15) zugewiesen ist.

11. Verfahren nach Anspruch 10, wobei das Verfahren die Übertragung mindestens einer Bestätigung (65) über das erste Funksystem (21) umfasst, wobei die Bestätigung (65) in Verbindung mit Nutzlastdaten (63) steht, die über das zweite Funksystem (31) übermittelt werden.

12. Verfahren nach Anspruch 10 oder 11, wobei das Verfahren die Übertragung einer Übertragungsanforderungsnachricht (59) über das erste Funksystem (21) Empfang der Betriebsmittelgewährungsnachricht (61) über das erste Funksystem (21) in Reaktion auf die Übertragungsanforderungsnachricht (61) umfasst.

13. Verfahren nach einem der Ansprüche 10 bis 12, wobei das Verfahren die Einrichtung einer Datenverbindung (55) zwischen der Basisstation (13) und dem Endgerät (15) über das erste Funksystem (21) zum Übermitteln der Übertragungsanforderungsnachricht (59), der Betriebsmittelgewährungsnachricht (61) und/oder der Bestätigungsnachricht (65) umfasst.

14. Basisstation (13) für ein drahtloses Kommunikationsnetzwerk (11), wobei besagte Basisstation (13) konfiguriert ist für das Ausführen eines Verfahrens nach einem der Ansprüche 1 bis 9.

15. Endgerät (15) für ein drahtloses Kommunikationsnetzwerk (11), wobei besagtes Endgerät (15) konfiguriert ist für das Ausführen eines Verfahrens nach einem der Ansprüche 10 bis 13.

## Revendications

1. Procédé de fonctionnement d'une station de base (13) d'un réseau sans fil (11), le procédé comprenant les étapes suivantes
- communiquer (49) avec au moins un terminal (15) du réseau (11) par l'intermédiaire d'un premier système radio (21) en utilisant un contrôle d'accès au support centralisé pour contrôler un accès aux ressources de transmission (23) du premier système radio (21) et
- communiquer (51) avec l'au moins un terminal (15) par l'intermédiaire d'un deuxième système radio (31) différent du premier système radio (21),
le procédé étant **caractérisé en ce qu'**il comprend en outre l'étape suivante :
- transmettre au moins un message d'attribution de ressources (61) au terminal (15) par l'intermédiaire du premier système radio (21), le message d'attribution de ressources (61) indiquant au moins une partie des ressources de transmission (29) du deuxième système radio (31) attribuée au terminal (15).

2. Procédé selon la revendication 1, le procédé comprenant le transfert d'au moins un accusé de réception (65) sur le premier système radio (21), l'accusé de réception (65) étant associé aux données de charge utile (63) transmises sur le deuxième système radio (31).

3. Procédé selon la revendication 1 ou 2, le procédé comprenant la réception d'un message de demande de transmission (59) à partir du terminal (15) sur le premier système radio (21) et la transmission du message d'attribution de ressources (61) en réponse au message de demande de transmission (59).

4. Procédé selon l'une des revendications précédentes, le procédé comprenant l'établissement d'une connexion de données (55) entre la station de base (13) et le terminal (15) sur le premier système radio (21) pour transférer le message de demande de transmission (59), le message d'attribution de ressources (61) et/ou le message d'accusé de réception (65).

5. Procédé selon la revendication 4, dans lequel les transmissions sur la connexion de données (55) sont planifiées avec une priorité élevée.

6. Procédé selon l'une des revendications précédentes, le procédé vérifiant (43) si le terminal (15) prend en charge les transmissions sur le deuxième système radio (31).

7. Procédé selon l'une des revendications précédentes, le procédé comprenant la diffusion d'au moins un message d'attribution de réseau (57) sur le deuxième système radio (31) afin d'empêcher au moins un autre terminal (15) d'accéder à l'au moins une partie des ressources de transmission (29) du deuxième système radio (31).

8. Procédé selon la revendication 7, dans lequel l'au moins une partie est un intervalle de temps d'un canal du deuxième système radio (31) et le message d'attribution de réseau (57) est diffusé afin d'empêcher l'au moins un autre terminal (15) d'accéder audit canal.

9. Procédé selon l'une des revendications précédentes, dans lequel le contrôle d'accès au support basé sur la contention est utilisé pour contrôler l'accès à au moins certaines ressources de transmission (29) du deuxième système radio (31).

10. Procédé de fonctionnement d'un terminal (15) d'un réseau sans fil, le procédé comprenant les étapes suivantes
- communiquer (49) avec une station de base (13) du réseau (11) par l'intermédiaire d'un premier système radio (21) en utilisant un contrôle d'accès au support centralisé pour contrôler un accès aux ressources de transmission (23) du premier système radio (21) et
- communiquer (51) avec la station de base (13) par l'intermédiaire d'un deuxième système radio (31) différent du premier système radio (21),
le procédé étant **caractérisé en ce qu'**il comprend en outre l'étape suivante :
- recevoir au moins un message d'attribution de ressources (61) transmis par la station de base (15) par l'intermédiaire du premier système radio (21), le message d'attribution de ressources (61) indiquant au moins une partie des ressources de transmission (29) du deuxième système radio (31) attribuée au terminal (15).

11. Procédé selon la revendication 10, le procédé comprenant le transfert d'au moins un accusé de réception (65) sur le premier système radio (21), l'accusé de réception (65) étant associé aux données de charge utile (63) transmises sur le deuxième système radio (31).

12. Procédé selon la revendication 10 ou 11, le procédé comprenant la transmission d'un message de demande de transmission (59) sur le premier système radio (21) et la réception du message d'attribution de ressources (61) en réponse au message de demande de transmission (61) sur le premier système radio (21).

13. Procédé selon l'une des revendications 10 à 12, le procédé comprenant l'établissement d'une connexion de données (55) entre la station de base (13) et le terminal (15) sur le premier système radio (21) pour transférer le message de demande de transmission (59), le message d'attribution de ressources (61) et/ou le message d'accusé de réception (65).

14. Station de base (13) pour un réseau de communication sans fil (11), ladite station de base (13) étant configurée pour exécuter un procédé selon l'une des revendications 1 à 9.

15. Terminal (15) pour un réseau de communication sans fil (11), ledit terminal (15) étant configuré pour exécuter un procédé selon l'une des revendications 10 à 13.
